# EUROPEAN PATENT APPLICATION

(11) **EP 4 797 418 A1**
(43) Date of publication of application: **26.08.2026**
(21) Application number: 25768704.6
(22) Date of filing: 05.03.2025
(51) Int. Cl.: H01M 50/446, H01M 50/42, H01M 50/431, H01M 50/46, H01M 4/58, H01M 4/136, H01M 50/403, H01M 10/052, H01M 4/02

(54) **SEPARATOR FOR ELECTROCHEMICAL DEVICE, METHOD FOR MANUFACTURING SAME, AND ELECTROCHEMICAL DEVICE COMPRISING SAME**

(30) Priority: 06.03.2024 KR 20240032161; 04.03.2025 KR 20250027553
(71) Applicant: LG Energy Solution, Ltd., Seoul 07335 (KR)
(72) Inventor: SHIN, Jin Young, Daejeon 34122 (KR); KA, Kyung Ryun, Daejeon 34122 (KR); SUNG, In Hyouk, Daejeon 34122 (KR); KIM, Min Gyu, Daejeon 34122 (KR); KIM, Hye Won, Daejeon 34122 (KR)
(74) Representative: Hoffmann Eitle
(86) International application number: PCT/KR2025/099557
(87) International publication number: WO 2025/188149

(57) **Abstract**

The present disclosure relates to a separator for an electrochemical device, a method for manufacturing the same, and an electrochemical device including the same, and more particularly, to a separator facing a dry electrode, wherein the separator is formed with a coating layer including a polymer binder and inorganic particles and does not include a polyolefin substrate, as well as a method for manufacturing the same and an electrochemical device including the same.

## Description

### Technical Field

The present disclosure claims priority to and the benefits of Korean Patent Application Nos. 10-2024-0032161 and 10-2025-0027553 filed with the Korean Intellectual Property Office on March 6, 2024, and March 4, 2025, respectively the entire contents of which are incorporated herein by reference.

The present disclosure relates to a separator for an electrochemical device, a method for manufacturing the same, and an electrochemical device including the same. In particular, the present disclosure relates to a separator for an electrochemical device, the separator facing a dry electrode, in which the separator is formed with a coating layer including a polymer binder and inorganic particles, and does not include a polyolefin substrate, a method for manufacturing the same, and an electrochemical device including the same.

### Background Art

Electrochemical devices convert chemical energy into electrical energy using an electrochemical reaction, and recently, lithium secondary batteries having high energy density and voltage, having a long cycle life, and applicable in various fields have been widely used.

A lithium secondary battery may include an electrode assembly prepared with a positive electrode, a negative electrode, and a separator disposed between the positive electrode and the negative electrode, and may be manufactured by accommodating the electrode assembly in a case together with an electrolyte liquid. The positive electrode may provide lithium ions, and the lithium ions may migrate to the negative electrode after passing through the separator formed of a porous material.

A manufacturing process of a lithium secondary battery is largely divided into three stages of an electrode process, an assembly process and a formation process. The electrode process is further divided into an active material mixing process, an electrode coating process, a drying process, a rolling process, a slitting process, a winding process and the like. Among these, the active material mixing process is a process of mixing a coating material for forming an electrode active layer where an actual electrochemical reaction occurs in the electrode, and the composition mixed for forming an electrode active layer is also referred to as an electrode mixture in a broad sense.

As a solvent included in the electrode mixture evaporates in the drying process, defects such as pinholes or cracks may be induced in the previously formed electrode active layer. In addition, since the inside and the outside of the active layer are not uniformly dried, a particle floating phenomenon caused by a difference in the solvent evaporation rate, that is, floating of particles in the area that is dried first, occurs, forming a gap with the area that is dried relatively later, and as a result, electrode quality may decline.

Accordingly, studies on manufacturing a dry electrode without using a solvent have been recently conducted.

Furthermore, there is an advantage in terms of output or battery resistance as the separator becomes thinner.

Accordingly, studies to achieve a thin separator while introducing a dry electrode have been required.

### DISCLOSURE

### Technical Problem

The present disclosure is directed to a separator, which faces a dry electrode, having improved battery performance even in a thin film form.

However, problems to be solved by the present disclosure are not limited to the above-mentioned problem, and other problems not mentioned will be clearly understood by those skilled in the art from the following description. **Technical Solution**

One embodiment of the present disclosure provides a separator for an electrochemical device, the separator facing a dry positive electrode, in which the separator is formed with a coating layer including a polymer binder and inorganic particles, and the separator is a free-standing porous separator that does not include a polyolefin substrate.

According to one embodiment of the present disclosure, the polymer binder may be an acryl-based binder.

According to one embodiment of the present disclosure, a content of the polymer binder may be 6 parts by weight or less with respect to 100 parts by weight of the separator.

According to one embodiment of the present disclosure, the inorganic particles may be at least one selected from the group consisting of SiO₂, Al₂O₃, AlOOH, TiO₂, ZrO₂, BaSO₄, BaTiO₃, ZnO, MgO, Mg(OH)₂, Al(OH)₃, Pb(Zr,Ti)O₃, Pb(Mg_{1/3}Nb_{2/3})O₃-PbTiO₃ (PMN-PT), HfO₂, SrTiO₃, SnO₂, CeO₂, MgO, NiO, CaO, Y₂O₃, SiC, ZnSn(OH)₆, Zn₂SnO₄, ZnSnO₃, Sb₂O₃, Sb₂O₄ and Sb₂O₅.

According to one embodiment of the present disclosure, a content of the inorganic particles may be 95 parts by weight or greater with respect to 100 parts by weight of the separator.

According to one embodiment of the present disclosure, the separator may have a thickness of less than 15 µm.

According to one embodiment of the present disclosure, the dry positive electrode may include a positive electrode active material, and the positive electrode active material may include an LFP (lithium iron phosphate)-based active material.

One embodiment of the present disclosure provides a method for manufacturing a separator for an electrochemical device including a dry positive electrode, the method including coating the dry positive electrode with a slurry for a coating layer including inorganic particles and a polymer binder to form a free-standing porous separator.

According to one embodiment of the present disclosure, the coating may use bar coating.

One embodiment of the present disclosure provides an electrochemical device including a dry positive electrode; a negative electrode; and the separator for an electrochemical device located between the dry positive electrode and the negative electrode.

### Advantageous Effects

By introducing a separator that does not include a polyolefin substrate, a separator for an electrochemical device according to one embodiment of the present disclosure is capable of improving battery performance even when thinning the separator.

By introducing a separator that does not include a polyolefin substrate, a method for manufacturing a separator for an electrochemical device according to one embodiment of the present disclosure is capable of improving battery performance while minimizing a thickness of the separator.

By introducing a separator that does not include a polyolefin substrate to a dry electrode, an electrochemical device according to one embodiment of the present disclosure is capable of improving battery performance even when thinning the separator.

### Brief Description of Drawings

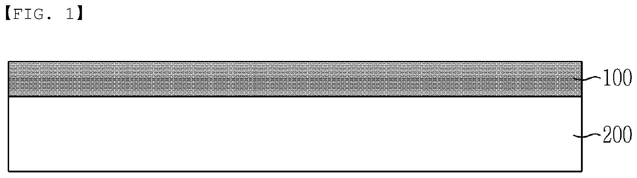

FIG. 1 is a schematic diagram illustrating a dry positive electrode and a separator according to one embodiment of the present disclosure.

### Best Mode

In the present specification, a description of a certain part "including" certain components means that it may further include other components, and does not exclude other components unless particularly stated on the contrary.

In the present specification, "A and/or B" means "A and B, or A or B".

In the present specification, a description of being provided "on" one component means that another component may be further disposed, and does not exclude another component being disposed in between unless particularly stated on the contrary.

In the present specification, "about" and "substantially" are used to refer to, considering unique manufacturing and material tolerances, a range of the number or degree or as a meaning close thereto, and are used to prevent infringers from unfairly using the disclosure stating precise or absolute numbers provided to help understand the present disclosure.

In the present specification, an "electrochemical device" may mean a primary battery, a secondary battery, a super capacitor or the like.

Hereinafter, the present disclosure will be described in more detail.

FIG. 1 is a schematic diagram illustrating a dry positive electrode 200 and a separator 100 according to one embodiment of the present disclosure.

One embodiment of the present disclosure includes a separator 100 for an electrochemical device, the separator 100 facing a dry positive electrode 200, in which the separator 100 is formed with a coating layer including a polymer binder and inorganic particles, and the separator is a free-standing porous separator 100 that does not include a polyolefin substrate.

The separator 100 for an electrochemical device according to one embodiment of the present disclosure is capable of improving battery performance even when thinning the separator by introducing a separator that does not include a polyolefin substrate.

In a general separator for an electrochemical device, a coating layer including inorganic particles and a binder polymer is formed on at least one surface of a porous polymer substrate, and as the porous polymer substrate, a polyolefin substrate or a non-woven fabric manufactured through a dry or wet process has been used.

The free-standing porous separator 100 means a separator 100 in which a pore structure formed with a coating layer including inorganic particles and a binder polymer is formed without the porous polymer substrate as above.

According to one embodiment of the present disclosure, the coating layer includes a polymer binder and inorganic particles. As the coating layer includes the polymer binder and the inorganic particles as described above, heat resistance and mechanical properties of the separator are improved, an occurrence of electrical short-circuit of an electrode caused by shrinkage of the separator at a high temperature is prevented, and pores may be formed inside the coating layer.

According to one embodiment of the present disclosure, the coating layer may be formed by the inorganic particles being bound by the polymer binder particles and integrated inside the layer. Pores inside the coating layer may result from an interstitial volume, an empty space between the inorganic particles.

Meanwhile, the free-standing porous separator 100 that does not include a polyolefin substrate may be vulnerable to external force and have low compression resistance since the outer shape is formed only with the inorganic particles and the binder polymer.

According to one embodiment of the present disclosure, a free-standing porous separator having excellent compression resistance is provided by increasing the content of the inorganic particles to be higher than the content of the binder without using a polyolefin substrate.

According to one embodiment of the present disclosure, the polymer binder may include an acryl-based copolymer, a styrene-butadiene copolymer, poly(acrylic acid), poly(methyl methacrylate), poly(butyl acrylate), poly(acrylonitrile), poly(vinyl pyrrolidone), poly(vinyl alcohol), poly(vinyl acetate), poly(ethylene-co-vinyl acetate), poly(ethylene oxide), poly(arylate), cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose, or two or more thereof.

According to one embodiment of the present disclosure, the polymer binder may be an acryl-based binder. Specifically, the polymer binder may be an acryl-based copolymer. By including the acryl-based copolymer, porosity of the separator may be maintained, and readiness of battery manufacturing may be improved. The acryl-based copolymer may include an ethyl acrylate-acrylic acid-N,N-dimethyl acrylamide copolymer, an ethyl acrylate-acrylic acid-2-(dimethylamino)ethyl acrylate copolymer, an ethyl acrylate-acrylic acid-N,N-diethyl acrylamide copolymer, an ethyl acrylate-acrylic acid-2-(diethylamino)ethyl acrylate copolymer, or two or more thereof, but is not limited thereto.

According to one embodiment of the present disclosure, the content of the polymer binder may be 6 parts by weight or less with respect to 100 parts by weight of the separator. Specifically, the content of the polymer binder may be 0.5 parts by weight or greater and 6 parts by weight or less, 1 part by weight or greater and 6 parts by weight or less, 0.5 parts by weight or greater and 5 parts by weight or less, 1 part by weight or greater and 5 parts by weight or less, 0.5 parts by weight or greater and 4.5 parts by weight or less, 1 part by weight or greater and 4.5 parts by weight or less, 1 part by weight or greater and 4 parts by weight or less, 1 part by weight or greater and 3.5 parts by weight or less, 1 part by weight or greater and 3 parts by weight or less, 1 part by weight or greater and 2.5 parts by weight or less, 1 part by weight or greater and 2 parts by weight or less, or 1.5 parts by weight or greater and 2 parts by weight or less, with respect to 100 parts by weight of the separator. When the content is greater than the above-described range, the content of the inorganic particles relatively decreases, reducing heat resistance, and furthermore, battery resistance and capacity performance may be inferior. When the content is less than the above-described range, it may be difficult to form pores inside the coating layer, which result from the binding of the inorganic material and the polymer binder, which may cause increases in permeability and resistance. By minimizing the content of the polymer binder in the above-described range, a free-standing separator that is superior to separators in the related art may be obtained.

According to one embodiment of the present disclosure, the polymer binder may have a D50 particle diameter of 100 nm or greater and 500 nm or less. Specifically, the polymer binder may have a D50 particle diameter of 100 nm or greater and 500 nm or less, 100 nm or greater and 450 nm or less, 100 nm or greater and 400 nm or less, 100 nm or greater and 350 nm or less, 100 nm or greater and 300 nm or less, 100 nm or greater and 250 nm or less, 100 nm or greater and 200 nm or less, or 150 nm or greater and 450 nm or less. Preferably, the polymer binder may have a D50 particle diameter of 150 nm. When the D50 particle diameter is greater than the above-described range, it may be difficult to form pores when binding with the inorganic material, and when the D50 particle diameter is less than the above-described range, binding with the inorganic material itself is difficult, reducing coatability. By adjusting the D50 particle diameter of the polymer binder in the above-described range, binding force with the inorganic particles may increase, improving battery performance.

According to one embodiment of the present disclosure, the inorganic particles may be at least one selected from the group consisting of SiO₂, Al₂O₃, AlOOH, TiO₂, ZrO₂, BaSO₄, BaTiO₃, ZnO, MgO, Mg(OH)₂, Al(OH)₃, Pb(Zr,Ti)O₃, Pb(Mg_{1/3}Nb_{2/3})O₃-PbTiO₃(PMN-PT), HfO₂, SrTiO₃, SnO₂, CeO₂, MgO, NiO, CaO, Y₂O₃, SiC, ZnSn(OH)₆, Zn₂SnO₄, ZnSnO₃, Sb₂O₃, Sb₂O₄ and Sb₂O₅. Preferably, the inorganic particles may be Al₂O₃.

According to one embodiment of the present disclosure, the content of the inorganic particles may be 95 parts by weight or greater with respect to 100 parts by weight of the separator. Specifically, the content of the inorganic particles may be 95 parts by weight or greater and 100 parts by weight or less, 95 parts by weight or greater and 99.5 parts by weight or less, 95 parts by weight or greater and 99 parts by weight or less, 95 parts by weight or greater and 98.5 parts by weight or less, 95 parts by weight or greater and 98 parts by weight or less, 95 parts by weight or greater and 97.5 parts by weight or less, 95 parts by weight or greater and 97 parts by weight or less, or 95 parts by weight or greater and 96.5 parts by weight or less, with respect to 100 parts by weight of the separator. When the content is greater than the above-described range, the content of the polymer binder is significantly reduced, and it may be difficult to form pores inside the coating layer, which result from the binding of the inorganic material and the polymer binder, causing increases in permeability and resistance. On the contrary, when the content is less than the above-described range, cell resistance and capacity performance may be inferior. Furthermore, by setting the content of the inorganic particles to be high, heat resistance properties may be secured even when thinning the separator.

According to one embodiment of the present disclosure, the D50 particle diameter of the inorganic particle is not particularly limited, but is preferably in a range of 0.3 µm or greater and 1 µm or less for forming a coating layer with uniform thickness and proper porosity. Specifically, when the D50 particle diameter is less than 0.3 µm, dispersibility of the inorganic particles may be reduced in the slurry prepared for preparing the coating layer, and when the D50 particle diameter is greater than 1 µm, the thickness of the formed coating layer may increase.

In the present specification, the "D50 particle diameter" means a particle diameter at a 50% point in cumulative distribution of the number of particles depending on the particle diameter. The particle diameter may be measured using a laser diffraction method. Specifically, a powder to be measured is dispersed in a dispersion medium and then introduced to a commercially available laser diffraction particle size measurement device (for example, Microtrac S3500), and a difference in the diffraction pattern depending on the particle size is measured when the particles pass through the laser beam to calculate particle size distribution. The D50 particle diameter may be measured by calculating a particle diameter at a 50% point in cumulative distribution of the number of particles depending on the particle diameter in the measurement device.

In one embodiment of the present disclosure, the separator may have a thickness of less than 15 µm. Specifically, the separator may have a thickness of greater than 8 µm and less than 15 µm, greater than 8 µm and 14 µm or less, 8.5 µm or greater and 13.5 µm or less, 9 µm or greater and 13 µm or less, 9 µm or greater and 12.5 µm or less, 9 µm or greater and 12 µm or less, 9 µm or greater and 11.5 µm or less, 9 µm or greater and 11 µm or less, or 9.5 µm or greater and 10.5 µm or less. When the thickness is greater than the above-described range, resistance increases due to the excessively thickened separator, causing decreases in capacity performance and capacity loss rate. When the thickness is less than the above-described range, coatability may decline due to the excessively thinned separator. By adjusting the thickness of the separator in the above-described range, the thickness of the separator may be reduced while securing heat resistance properties, and battery performance may be improved. In addition, a separator that is thinner than a general separator manufactured to include a porous polymer substrate may be obtained. The problem of decline in the heat resistance properties caused by separator thinning may be overcome by securing heat resistance properties through setting the content of the inorganic particles to be high in the coating layer.

In one embodiment of the present disclosure, the thicknesses of the separator, the coating layer and the like may be measured using a contact-type thickness measurement device. As an example of the contact-type thickness measurement device, VL-50S-B manufactured by Mitutoyo Corporation may be used.

According to one embodiment of the present disclosure, the coating layer may have porosity of 30% by volume or greater. Specifically, the coating layer may have porosity of 30% by volume or greater and 70% by volume or less, 32% by volume or greater and 68% by volume or less, 34% by volume or greater and 66% by volume or less, 36% by volume or greater and 64% by volume or less, 38% by volume or greater and 62% by volume or less, 40% by volume or greater and 60% by volume or less, 42% by volume or greater and 58% by volume or less, 44% by volume or greater and 56% by volume or less, 46% by volume or greater and 54% by volume or less, or 48% by volume or greater and 52% by volume or less. By adjusting the porosity of the coating layer in the above-described range, migration of ions is maintained in the separator, and an increase in the resistance of the separator may be prevented.

In the present specification, the porosity means a ratio of the volume occupied by the pores with respect to the total volume, and % by volume is used as the unit.

In the present specification, the porosity corresponds to a value obtained by subtracting the volume converted using weight and density of each component of the coating layer from the volume calculated by thickness, width and length of the coating layer.

In one embodiment of the present disclosure, porosity and pore size of the coating layer may be measured using a BET 6 point method by a nitrogen gas adsorption flow method using a scanning electron microscope (SEM) image, mercury porosimeter, a capillary flow porometer or a porosimetry analyzer (Bell Japan Inc, Belsorp-II mini). Herein, it may be advantageous to use a capillary flow porometer.

According to one embodiment of the present disclosure, the separator 100 faces the dry positive electrode 200. An existing separator facing a wet positive electrode has problems in that, when a water dispersion process is performed during the manufacture of the wet positive electrode and then an aqueous slurry for a coating layer is coated thereon, shrinkage of the coating layer occurs at a high temperature, and an increase in the thickness of the separator may be caused, resulting in inferior battery performance. In contrast, the dry positive electrode is an electrode that may be coated without a solvent, and even when coating the separator on the dry positive electrode, shrinkage of the coating layer does not occur at a high temperature, leading to an advantage of excellent coatability compared to the wet positive electrode.

According to one embodiment of the present disclosure, the separator 100 may further include a surfactant. The surfactant may be added to further facilitate casting of the coating layer composition. As the surfactant, a polyether-modified siloxane-based surfactant may be used, and when including the same, the coating layer composition may be coated with a more uniform thickness.

The polyether-modified siloxane-based surfactant is a surfactant including a polyether chain on the end and/or side chain of the polysiloxane main chain. For example, the polyether-modified siloxane-based surfactant may include a polyethylene oxide group and/or a polypropylene oxide group.

Commercially available materials may be used as such a polyether-modified siloxane-based surfactant, and for example, one or more selected from the group consisting of BYK-345, BYK-346, BYK-347, BYK-348, BYK-349, BYK-3450, BYK-3455, BYK-3456, BYK-3560, BYK-3565 and BYK-3760 may be used.

The content of the polyether-modified siloxane-based surfactant may be from 0.05 parts by weight to 1.0 part by weight with respect to 100 parts by weight of the coating layer composition, or the content may be more preferably 0.1 parts by weight or greater, 0.15 parts by weight or greater, or 0.2 parts by weight or greater, and 0.8 parts by weight or less, 0.7 parts by weight or less, or 0.6 parts by weight or less. By adjusting the parts by weight of the surfactant in the above-described range, an effect of improving coatability of the coating layer may be secured.

According to one embodiment of the present disclosure, the solvent may be used without limit in the composition as long as it is capable of dissolving the above-described components, and for example, one or more selected from the group consisting of water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethyl ether, toluene, xylene, butyrolactone, carbitol, methyl cellosolve acetate and N,N-dimethylacetamide may be combined and used. Preferably, water may be used as the solvent.

One embodiment of the present disclosure includes a method for manufacturing a separator 100 for an electrochemical device including a dry positive electrode 200, the method including coating the dry positive electrode with a slurry for a coating layer including inorganic particles and a polymer binder to form a free-standing porous separator 100.

By introducing a separator that does not include a polyolefin substrate, the method for manufacturing a separator for an electrochemical device according to one embodiment of the present disclosure is capable of improving battery performance while minimizing a thickness of the separator.

According to one embodiment of the present disclosure, the method for manufacturing a separator for an electrochemical device includes mixing a slurry for a coating layer including polymer binder particles and inorganic particles. As the method includes mixing a slurry for a coating layer including polymer binder particles and inorganic particles as described above, the coating layer may be readily formed on the separator.

According to one embodiment of the present disclosure, the inorganic particles may be added to and dispersed in the polymer binder. The content ratio between the inorganic particles and the polymer binder particles is as described above, and is properly adjusted considering thickness, pore size and porosity of the coating layer according to one embodiment of the present disclosure finally prepared.

According to one embodiment of the present disclosure, the polymer binder particles and the inorganic particles may be dispersed in water to prepare a slurry.

According to one embodiment of the present disclosure, the method of coating the slurry for a coating layer on the dry positive electrode may be at least one selected from the group consisting of bar coating, dip coating, die coating, roll coating, comma coating, and combinations thereof. Preferably, bar coating may be used.

According to one embodiment of the present disclosure, the method for manufacturing a separator for an electrochemical device includes drying the slurry for a coating layer to provide a coating layer. By including the step of drying the slurry for a coating layer to provide a coating layer as described above, damage to the coating layer may be minimized, and the solvent included in the slurry may be readily removed.

According to one embodiment of the present disclosure, the drying process properly sets a time condition so that an occurrence of surface defects is minimized in the coating layer. For the drying, a drying auxiliary device such as a dry oven or hot air may be used to an appropriate extent.

One embodiment of the present disclosure includes an electrochemical device including: a dry positive electrode 200; a negative electrode; and the separator 100 for an electrochemical device located between the dry positive electrode 200 and the negative electrode.

The electrochemical device according to one embodiment of the present disclosure is capable of suppressing a spring-back phenomenon and securing battery performance and insulation by introducing the separator 100 that does not include a polyolefin substrate to the dry positive electrode 200.

In the present disclosure, the electrochemical device is a device converting chemical energy into electrical energy using an electrochemical reaction, and is a concept encompassing a primary battery and a secondary battery. In the present specification, the secondary battery is a battery capable of charging and discharging, and means a lithium secondary battery, a nickel-cadmium battery, a nickel-hydrogen battery or the like. The lithium secondary battery uses lithium ions as an ion conductor, and examples thereof may include a non-aqueous electrolyte secondary battery including a liquid electrolyte, an all-solid-state battery including a solid electrolyte, a lithium polymer battery including a gel polymer electrolyte, a lithium metal battery using lithium metal as a negative electrode, and the like. However, the lithium secondary battery is not limited thereto.

According to one embodiment of the present disclosure, the positive electrode is provided with a positive electrode current collector, and a positive electrode active material layer including a positive electrode active material, a conductor and a binder resin on at least one side surface of the current collector. The positive electrode active material may include, for example, a lithium transition metal oxide; a lithium metal iron phosphate; a lithium nickel-manganese-cobalt oxide; an oxide in which some of lithium nickel-manganese cobalt oxide is substituted with other transition metals; or two or more thereof, but is not limited thereto. Specifically, examples of the positive electrode active material may include a layered compound such as lithium cobalt oxide (LiCoO₂) or lithium nickel oxide (LiNiO₂) or a compound substituted with one or more transition metals; lithium manganese oxide such as a chemical formula of Li₁₊ₓMn₂₋ₓO₄ (herein, x is from 0 to 0.33), LiMnO₃, LiMn₂O₃ or LiMnO₂; lithium copper oxide (Li₂CuO₂); vanadium oxide such as LiV₃O₈, LiV₃O₄, V₂O₅ or Cu₂V₂O₇; Ni-site-type lithium nickel oxide represented by a chemical formula of LiNi₁₋ₓMₓO₂ (herein, M=Co, Mn, Al, Cu, Fe, Mg, B or Ga, and x=0.01 to 0.3); lithium manganese composite oxide represented by a chemical formula of LiMn₂₋ₓMₓO₂ (herein, M=Co, Ni, Fe, Cr, Zn or Ta, and x=0.01 to 0.1) or Li₂Mn₃MO₈ (herein, M=Fe, Co, Ni, Cu or Zn); lithium metal phosphate LiMPO₄ (herein, M=Fe, CO, Ni or Mn); lithium nickel-manganese-cobalt oxide Li₁₊ₓ(NiaCobMnc)₁₋ₓO₂ (x=0 to 0.03, a=0.3 to 0.95, b=0.01 to 0.35, c=0.01 to 0.5, and a+b+c=1); an oxide in which some of lithium nickel-manganese-cobalt oxide is substituted with aluminum Liₐ[Ni_{b}Co_{c}Mn_{d}Alₑ]_{1-f}M1_{f}O₂ (M1 is at least one selected from the group consisting of Zr, B, W, Mg, Ce, Hf, Ta, La, Ti, Sr, Ba, F, P and S, 0.8≤a≤1.2, 0.5≤b≤0.99, 0<c<0.5, 0<d<0.5, 0.01≤e≤0.1, and 0≤f≤0.1); an oxide in which some of lithium nickel-manganese-cobalt oxide is substituted with other transition metals Li₁₊ₓ(NiₐCo_{b}Mn_{c}M_{d})₁₋ₓO₂ (x=0 to 0.03, a=0.3 to 0.95, b=0.01 to 0.35, c=0.01 to 0.5, d=0.001 to 0.03, and a+b+c+d=1, M is any one selected from the group consisting of Fe, V, Cr, Ti, W, Ta, Mg and Mo), a disulfide compound; Fe₂(MoO₄)₃, and the like, but are not limited thereto.

According to one embodiment of the present disclosure, the positive electrode active material may include an LFP (lithium iron phosphate)-based active material. By the positive electrode active material including an LFP (lithium iron phosphate)-based active material as described above, dry manufacturing is possible, and battery insulation and battery performance may be secured without including a polyolefin substrate.

According to one embodiment of the present disclosure, the negative electrode is provided with a negative electrode current collector, and a negative electrode active material layer including a negative electrode active material, a conductor and a binder resin on at least one side surface of the current collector. The negative electrode may include, as the a negative electrode active material, one selected from among lithium metal oxide; carbon such as non-graphitizable carbon or graphite-based carbon; metal composite oxides such as LiₓFe₂O₃ (0≤x≤1), LiₓWO₂ (0≤x≤1) and SnₓMe₁₋ₓMe'_{y}O_{z} (Me: Mn, Fe, Pb, Ge; Me': Al, B, P, Si, elements of groups 1, 2 and 3 of the periodic table, halogen; 0<x≤1; 1≤y≤3; 1≤z≤8); lithium metal; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymers such as polyacetylene; Li-Co-Ni-based materials; and titanium oxide, or a mixture of two or more thereof.

According to one embodiment of the present disclosure, the conductor may be, for example, any one selected from the group consisting of graphite, carbon black, carbon fiber or metal fiber, metal powder, conductive whisker, conductive metal oxides, activated carbon and polyphenylene derivatives, or a mixture of two or more of these conductive materials. More specifically, the conductor may be one selected from the group consisting of natural graphite, artificial graphite, super-p, acetylene black, ketjen black, channel black, furnace black, lamp black, thermal black, denka black, aluminum powder, nickel powder, zinc oxide, potassium titanate and titanium oxide, or a mixture of two or more of these conductive materials.

According to one embodiment of the present disclosure, the current collectors are not particularly limited as long as they have high conductivity without causing chemical changes to the corresponding battery, and for example, stainless steel, copper, aluminum, nickel, titanium, baked carbon, or aluminum or stainless steel of which surface is treated with carbon, nickel, titanium, silver or the like, and the like may be used.

According to one embodiment of the present disclosure, as the binder resin, polymers commonly used in an electrode in the art may be used. Nonlimiting examples of such a binder resin may include polyvinylidene fluoride-co-hexafluoropropylene, polyvinylidene fluoride-co-trichloroethylene, polymethyl methacrylate, polyethylhexyl acrylate, polybutyl acrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose and the like, but are not limited thereto.

In the dry positive electrode 200 according to one embodiment of the present disclosure, the binder is not particularly limited to a specific binder as long as it is capable of fiblization in the process of preparing a mixture chunk. The fiblization refers to a process in which a polymer is segmented into fine pieces, and may be performed using, for example, mechanical shear force or the like. The surface of such a fiblized polymer fiber is untied, resulting in a large number of fine fibers (fibrils).

Nonlimiting examples of such a binder polymer may include polytetrafluoroethylene (PTFE), polyolefin or a mixture thereof, may specifically include polytetrafluoroethylene (PTFE), and may be more specifically polytetrafluoroethylene (PTFE). Specifically, the polytetrafluoroethylene (PTFE) may be included in an amount of 60% by weight or greater based on the total weight of the entire binder polymer. Meanwhile, the binder material herein may further include at least one of PEO (polyethylene oxide), PVdF (polyvinylidene fluoride), PVdF-HFP (polyvinylidene fluoride-co-hexafluoropropylene) and polyolefin-based polymers.

In the preparing of the dry positive electrode 200 according to one embodiment of the present disclosure, the mixing for mixing the electrode materials is performed so that the electrode active material and the binder polymer, and optionally the conductor are uniformly distributed, and since the components are mixed in a powder form, the method of mixing is not limited as long as it allows simple mixing, and various methods may be used for the mixing. However, the method is for preparing a dry electrode without using a solvent, and therefore, the mixing may be performed as dry mixing, and may be performed by introducing the materials to a device such as a blender or a super mixer.

According to one embodiment of the present disclosure, when the mixing is performed in a blender, the mixing may be performed for 30 seconds to 20 minutes at 5,000 rpm to 20,000 rpm in the blender, and specifically for 30 seconds to 5 minutes at 10,000 rpm to 15,000 rpm to secure uniformity.

Then, a step of kneading the mixture of the electrode materials at a high temperature and a low shear rate to obtain a mixture chunk may be performed.

This is a step for fiblizing the binder in the mixture prepared as above, and is also referred to as a kneading process.

In one embodiment of the present disclosure, low-shear kneading may be performed to fiblize the binder, micronize the active material, and to resolve a problem of cutting the formed fiber, however, the step is not limited thereto.

Herein, the kneading may be performed using, for example, a kneader, although not limited thereto.

Such kneading is a step of forming a mixture chunk of 100% solid by combining or connecting the active materials or the active material and the conductor powders as the binder is fiblized.

In one embodiment of the present disclosure, the kneading may be performed for 1 minute to 30 minutes at a rate of 10 rpm to 100 rpm, and specifically, for 3 minutes to 10 minutes at a rate of 20 rpm to 50 rpm.

According to one embodiment of the present disclosure, the electrochemical device prepared as above may be inserted into an appropriate case, and an electrolyte liquid may be injected thereinto to manufacture a battery.

According to one embodiment of the present disclosure, the electrolyte liquid includes one obtained by dissolving or dissociating a salt having a structure such as A⁺B⁻, in which A⁺ includes an ion consisting of an alkali metal cation such as Li⁺, Na⁺ or K⁺ or a combination thereof and B⁻ includes an ion consisting of an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻ or C(CF₂SO₂)₃⁻ or a combination thereof, in an organic solvent consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma butyrolactone (γ-butyrolactone) or a mixture thereof, however, the electrolyte liquid is not limited thereto.

In one embodiment of the present disclosure, the outer shape of the electrochemical device may include a cylindrical shape using a can, a prismatic shape, a pouch shape or a coin shape. Preferably, the electrochemical device may be a cylindrical battery. By selecting a cylindrical battery as the electrochemical device as described above, an additional adhesive layer is not required, and a thin separator may be obtained.

In addition, one embodiment of the present disclosure provides a battery module including a battery including the electrochemical device as a unit cell, a battery pack including the battery module, and a device including the battery pack as a power source. Specific examples of the device may include power tools operated by receiving power by an electric motor; electric motor vehicles including electric vehicles (EV), hybrid electric vehicles (HEV), plug-in hybrid electric vehicles (PHEV) and the like; electric two-wheeled bicycles including electric bicycles (E-bike) and electric scooters (E-scooter); electric golf carts; systems for power storage and the like, but are not limited thereto.

### Mode for Invention

Hereinafter, the present disclosure will be described in detail with reference to examples in order to specifically describe the present disclosure. However, examples according to the present disclosure may be modified to various different forms, and the scope of the present disclosure is not construed as being limited to the examples described below. Examples of the present specification are provided in order to more fully describe the present disclosure to those having average knowledge in the art.

### <Example 1>

Al₂O₃ having a D50 of 500 nm as an inorganic material, an acryl-based copolymer (Toyo Ink, Co., Ltd. CSB-140) having a D50 of 150 nm as a polymer binder, a PAA-based dispersant (CK-702) and a surfactant (BYK-348) were employed in a ratio of 95.4:2:2:0.6 parts by weight to prepare an aqueous slurry for a coating layer (solid content 35%).

The aqueous slurry for a coating layer was single side coated (bar coated) on a dry LFP positive electrode to prepare a separator. Herein, the separator had a thickness of 10 µm.

### <Example 2>

A separator was prepared in the same manner as in Example 1, except that the separator had a thickness of 9 µm.

### <Example 3>

A separator was prepared in the same manner as in Example 1, except that the separator had a thickness of 12 µm.

### <Example 4>

Al₂O₃ as an inorganic material, an acryl-based copolymer (Toyo Ink, Co., Ltd. CSB-140) having a D50 of 150 nm as a polymer binder, a PAA-based dispersant (CK-702) and a surfactant (BYK-348) were employed in a ratio of 96.5:1.5:1.4:0.6 parts by weight to prepare an aqueous slurry for a coating layer (solid content 35%).

The aqueous slurry for a coating layer was single side coated (bar coated) on a dry LFP positive electrode to prepare a separator. Herein, the separator had a thickness of 10 µm.

### <Comparative Example 1>

A separator was prepared in the same manner as in Example 1, except that the separator had a thickness of 8 µm.

### <Comparative Example 2>

A separator was prepared in the same manner as in Example 1, except that the separator had a thickness of 15 µm.

### <Comparative Example 3>

A polyolefin (PO) resin was extruded, and a porous polymer substrate (total thickness of about 10 µm) was prepared using a wet method.

The slurry for a coating layer of Example 1 was coated on both surfaces of the porous polymer substrate to a thickness of 1.5 µm each to prepare a separator.

### <Comparative Example 4>

A separator was prepared in the same manner as in Example 1, except that single side coating (bar coating) was performed on a wet LFP positive electrode instead of the dry LFP positive electrode.

### <Comparative Example 5>

A separator was prepared in the same manner as in Comparative Example 3, except that single side coating (bar coating) was performed on a wet LFP positive electrode instead of the dry LFP positive electrode.

### <Comparative Example 6>

Al₂O₃ as an inorganic material, an acryl-based copolymer (Toyo Ink, Co., Ltd. CSB-140) having a D50 of 150 nm as a polymer binder, a PAA-based dispersant (CK-702) and a surfactant (BYK-348) were employed in a ratio of 92:5:2.4:0.6 parts by weight to prepare an aqueous slurry for a coating layer (solid content 35%).

The aqueous slurry for a coating layer was single side coated (bar coated) on a dry LFP positive electrode to prepare a separator. Herein, the separator had a thickness of 10 µm.

### <Manufacture of Electrochemical Device>

### (1) Preparation of Negative Electrode

A negative electrode active material (P20T/LSN-1, graphite), a binder (ADB22D, styrene butadiene rubber, (SBR)-based polymer), an aqueous CMC solution (Daicel 2200, product of Daicel Chemical Industries, Ltd.) and a conductor (Super-C65, carbon black) were mixed with water in a weight ratio of 80.3/19.7:2.3:1.05:0.5 to prepare a slurry for a negative electrode active material layer in which the components other than water had a concentration of 50 wt%. Then, the slurry was coated on a surface of a copper thin film (thickness 10 µm), and dried to prepare a negative electrode having a negative electrode active material layer (thickness 120 µm).

### (2) Preparation of Positive Electrode

### 1) Preparation of Wet Electrode

A positive electrode active material (S20, LFP), a conductor (CNT (LB-CNT)), a binder (KF7200) and a dispersant (HPD-01) were mixed with water in a weight ratio of 95.96:0.8:3.0:0.24 to prepare a slurry for a positive electrode active material layer in which the components other than water had a concentration of 50 wt%. Then, the slurry was coated on a surface of an aluminum thin film (thickness 10 µm), and dried to prepare a positive electrode having a positive electrode active material layer (thickness 120 µm).

### 2) Preparation of Dry Electrode

A positive electrode active material (S20, LFP), a conductor (Li-435) and a binder (PTFE) were introduced to a blender in a weight ratio of 94.0:1.5:4.5, and mixed for 1 minute at 15,000 rpm to obtain a mixture.

Then, the temperature of a kneader (Shinil Dispersion Machine) was stabilized at 150°C, the mixture prepared above was introduced to the kneader, and then the kneader was operated for 5 minutes at a rate of 40 rpm under a pressure of 1.1 atm to obtain a mixture chunk.

The mixture chunk was introduced to a blender (Waring), and pulverized for 1 minute at 10,000 rpm to obtain a powder for an electrode.

After that, the mixture powder for an electrode was introduced to a lab calendar (roll diameter: 200 mm, roll temperature: 100°C, 20 rpm), and a calendaring process was repeatedly performed so that porosity is 35% or less. Herein, the pressure between the rolls was employed at 221 kg/cm during the last calendaring to prepare an electrode film. Herein, the prepared electrode film had a thickness of 82 µm, porosity (%) of 31%, and a loading amount of 5.11 mAh/cm².

A slurry for forming a primer layer was coated on aluminum foil, and dried to form a primer layer on a current collector. The primer layer includes carbon black and a PVDF binder in a weight ratio of 1:2. A lamination process was performed such that two of the electrode films were laminated on both surfaces of the primer layer-formed aluminum foil (average thickness: 19 µm) using a roll press maintained at room temperature and porosity of the electrode active material layer was 30% or less, to ground the electrode films on the current collector, thereby preparing an electrode in which an electrode active material layer is formed on both surfaces of the current collector. Herein, the electrode film grounded on the current collector, that is, the electrode active material layer, had a thickness of 75 µm, porosity (%) of 25.9%, and a loading amount of 5.05 mAh/cm².

### <Experimental Example>

### (1) Measurement of Battery Initial Resistance

The battery was charged and discharged three times under a condition of 0.33 C-rate at room temperature, and battery resistance was evaluated by a value identified when applying a current for 10 seconds with a 2.5 C-rate at SOC 50. The measurement results are shown in the following Table 1.

### (2) Evaluation of Battery Initial Capacity and Capacity Retention Rate

For each of the lithium secondary batteries manufactured as above, 100 cycles of charging and discharging were performed, 1 cycle consisting of charging the battery to 4.2 V with 0.33 C in a CC-CV mode at 25°C and discharging the battery to 2.5 V with a constant current of 0.33 C, and initial capacity and capacity retention rate after 500 cycles were measured to evaluate lifetime properties. The measurement results are shown in the following Table 1.

### (3) Measurement of Dry Heat Shrinkage Ratio at 180°C

The separators of Comparative Examples 3 and 5 were each cut to a size of 5 cmx5 cm to prepare a sample. The sample was left unattended in a convection oven for 30 minutes at 180°C, and then taken out to calculate a heat shrinkage ratio in MD and TD directions according to [(length of initial specimen-length after being stored for 0.5 hours at 180°C)/(length of initial specimen)]x100 (%). The results are shown in the following Table 1.

**[Table 1]**

| | Example 1 | Example 2 | Example 3 | Example 4 | Comparative Example 1 | ComparativeExample 2 | ComparativeExample 3 | ComparativeExample 4 | ComparativeExample 5 | ComparativeExample 6 |
|---|---|---|---|---|---|---|---|---|---|---|
| Positive Electrode | Dry LFP | Dry LFP | Dry LFP | Dry LFP | Dry LFP | Dry LFP | Dry LFP | Wet LFP | Wet LFP | Dry LFP |
| Presence of Separator Substrate | X | X | X | X | X | X | O | X | O | X |
| Content of Inorganic Material (wt%) | 95 | 95 | 95 | 96 | 95 | 95 | 95 | 95 | 95 | 92 |
| Separator Thickness (µm) | 10 | 9 | 12 | 10 | 8 (Partially Coated) | 15 | 13 | 10 | 13 | 10 |
| Battery Initial Capacity (mAh) | 40.1 | 40.3 | 38.7 | 40.2 | Short Circuit Occurred , Unable to Eval uate | 37.7 | 38.5 | Unable to Coat , Unable to Eval uate | 38.6 | 38.1 |
| Battery Initial Resistance (mohm) | 1.21 | 1.20 | 1.25 | 1.20 | | 1.27 | 1.25 | | 1.25 | 1.26 |
| Capacity Loss Rate after 25°C, 1C/1C, 500 Cycles (%) | 2.7 | 2.2 | 3.9 | 2.4 | | 5.2 | 4.3 | | 4.0 | 4.7 |
| Dry Heat Shrinkage Ratio at 180°C (%, MD/TD) | - | - | - | - | - | - | 3/3 | - | 3/3 | - |

According to Table 1, it may be identified that, in Example 1, the separator thickness may be controlled to be small by not including a separator substrate in the dry LPF positive electrode, and the battery initial resistance is low, the battery initial capacity is high and the capacity loss rate is low.

In contrast, Comparative Example 1 has a problem in that the separator is partially coated when coated too thinly to a thickness of 8 µm, resulting in an internal short caused by the uncoated portion.

Comparative Example 2 does not have an insulation problem, but it may be seen that resistance increases compared to the Examples as the separator thickness increases, resulting in inferior capacity performance and capacity loss rate.

In Comparative Examples 3 and 5, it may be seen that, since the separator includes a porous polymer substrate, the separator thickness increases and resistance and capacity performance are inferior compared to the Examples. In addition, it may be seen that, since the separator includes a porous polymer substrate, heat shrinkage occurs in the MD and TD directions at a high temperature of 180°C when measuring the dry heat shrinkage ratio for the separator. In contrast, in the Examples of the present disclosure, coating is performed on a dry positive electrode to prepare a separator and coating layer shrinkage does not occur at a high temperature.

In Comparative Example 4, the aqueous slurry for a coating layer was not wetted due to a difference in the surface properties with the wet positive electrode, and it was impossible to coat the slurry.

In Comparative Example 6, it may be seen that resistance and capacity performance are inferior due to the small inorganic material content compared to the Examples.

Accordingly, in the separator for an electrochemical device, the method for manufacturing the same and the electrochemical device including the same according to one embodiment of the present disclosure, the separator facing a dry positive electrode is formed with a coating layer including a polymer binder and inorganic particles, and does not include a polyolefin substrate, and as a result, excellent heat resistance properties may be obtained and battery performance may be improved while thinning the separator.

### [Reference Numeral]

100: Separator
200: Dry Positive Electrode

## Claims

1. A separator for an electrochemical device, the separator facing a dry positive electrode,
wherein the separator is formed with a coating layer including a polymer binder and inorganic particles, and
the separator is a free-standing porous separator that does not include a polyolefin substrate.

2. The separator of claim 1, wherein the polymer binder is an acryl-based binder.

3. The separator of claim 1, wherein a content of the polymer binder is 6 parts by weight or less with respect to 100 parts by weight of the separator.

4. The separator of claim 1, wherein the inorganic particles are at least one selected from the group consisting of SiO₂, Al₂O₃, AlOOH, TiO₂, ZrO₂, BaSO₄, BaTiO₃, ZnO, MgO, Mg(OH)₂, Al(OH)₃, Pb(Zr,Ti)O₃, Pb(Mg_{1/3}Nb_{2/3})O₃-PbTiO₃ (PMN-PT), HfO₂, SrTiO₃, SnO₂, CeO₂, MgO, NiO, CaO, Y₂O₃, SiC, ZnSn(OH)₆, Zn₂SnO₄, ZnSnO₃, Sb₂O₃, Sb₂O₄ and Sb₂O₅.

5. The separator of claim 1, wherein a content of the inorganic particles is 95 parts by weight or greater with respect to 100 parts by weight of the separator.

6. The separator of claim 1, wherein the separator has a thickness of less than 15 µm.

7. The separator of claim 1, wherein the dry positive electrode includes a positive electrode active material, and the positive electrode active material includes an LFP (lithium iron phosphate)-based active material.

8. A method for manufacturing a separator for an electrochemical device including a dry positive electrode, the method comprising coating the dry positive electrode with a slurry for a coating layer including inorganic particles and a polymer binder to form a free-standing porous separator.

9. The method of claim 8, wherein the coating uses bar coating.

10. An electrochemical device comprising:
a dry positive electrode;
a negative electrode; and
the separator for an electrochemical device of claim 1 located between the dry positive electrode and the negative electrode.
